# EUROPÄISCHE PATENTANMELDUNG

(11) **EP 1 870 227 A2**
(43) Veröffentlichungstag der Anmeldung: **26.12.2007**
(21) Anmeldenummer: 07009698.7
(22) Anmeldetag: 15.05.2007
(51) Int. Cl.: B29C 65/16, B60J 7/00

(54) **Verwendung eines Laser-Duchstrahlschweiss-Verfahrens zum Herstellen eines Fahrzeugdachteils**

(30) Priorität: 15.05.2006 DE 102006022928
(71) Anmelder: Webasto AG, 82131 Stockdorf (DE)
(72) Erfinder: Schwaighofer, Ralf, 83115 Neubeuern (DE); Lang, Andreas, 82194 Gröbenzell (DE); Boß, Markus, 93055 Regensburg (DE); Nawroth, Manfred, 51688 Wipperfürth (DE)

(57) **Zusammenfassung**

Die Erfindung betrifft eine Verwendung eines Laser-Durchstrahlschweiss-Verfahrens zum Herstellen eines Fahrzeug-Dachteils (12, 14) mit wenigstens zwei miteinander verbundenen Kunststoffschichten (32, 34). Die vorteilhafte Verwendung sieht vor, dass das Fahrzeug-Dachteil (12, 14) wenigstens eine erste obere transparente Kunststoffschicht (34) und eine zweite untere nicht transparente Kunststoffschicht (38) aufweist, die an ihrer Trennfläche (40) mittels eines Laserstrahls (52) eines oberhalb der ersten Kunststoffschicht (32) geführten Laserschweisskopfs (50) zumindest punktuell miteinander verbunden werden.

## Beschreibung

Die Erfindung betrifft eine Verwendung eines Laser-Durchstrahlschweiss-Verfahrens zum Herstellen eines Fahrzeug-Dachteils.

Ein derartiges Laser-Durchstrahlschweiss-Verfahren ist aus der EP 1 405 713 A1 bekannt. Offenbart ist dort ein Verfahren und eine Vorrichtung zum Verbinden von Werkstücken aus Kunststoff, wobei das obere, einer Laserquelle zugewandte Werkstück aus einem für den Laserstrahl transparenten Material und das untere Werkstück aus einem für den Laserstrahl absorbierenden Material besteht, so dass die aneinandergrenzenden Kontaktflächen der beiden Werkstücke aufschmelzen und sich bei der anschliessenden Abkühlung unter Druck miteinander verbinden. Für diese Kunststoffschweissmethode ist es wichtig, dass während des Schweissvorgangs die Werkstücke miteinander verspannt werden, da eine wichtige Voraussetzung für eine gute Schweissverbindung der Kunststoffe mittels Laserstrahlung nicht nur die Energiedosierung, sondern auch der saubere mechanische Kontakt zwischen den beiden miteinander zu verbindenden Fügeflächen ist. Hierzu sind verschiedene Verfahren und Vorrichtungen bekannt, die insbesondere bei flächigen Teilen eine ausreichende Anpresskraft ermöglichen.

Der Erfindung liegt die Aufgabe zugrunde, eine vorteilhafte Verwendung des Laser-Durchstrahlschweiss-Verfahrens zum Herstellen eines Fahrzeug-Dachteils anzugeben.

Diese Aufgabe wird erfindungsgemäß durch die Merkmale des Patentanspruchs 1 gelöst. Vorteilhafte Ausgestaltungen der Erfindung sind in den Unteransprüchen angegeben.

Die Erfindung sieht im Kern vor, dass das Fahrzeug-Dachteil wenigstens eine erste obere transparente Kunststoffschicht und eine zweite untere nicht transparente Kunststoffschicht aufweist, die an ihrer Trennfläche mittels eines Laserstrahls eines oberhalb der ersten Kunststoffschicht geführten Laserschweisskopfs zumindest punktuell miteinander verbunden werden.

Die erste obere transparente Kunststoffschicht besteht bevorzugt aus einem Polycarbonat.

Auch die zweite untere nicht transparente Kunststoffschicht besteht bevorzugt aus einem insbesondere schwarzem Polycarbonat.

Gemäß einer vorteilhaften Variante ist vorgesehen, dass der Laserstrahl zum nachträglichen Aufschmelzen von problematischen Kontaktbereichen der ersten Kunststoffschicht mit der zweiten Kunststoffschicht verwendet wird, wobei die zweite Kunststoffschicht zuvor durch ein Kunststoffspritzverfahren mit der ersten Kunststoffschicht flächig verbunden wurde. Dadurch kann die Verbindung beispielsweise an spitzwinkligen Verbindungsstellen, bei denen der zweite Kunststoff aufgrund eines zu zähen Fliessens beim Spritzen eventuell nicht das Ende eines Hohlraumes im ersten Kunststoff erreicht, durch nachträgliches Aufschmelzen verbessert werden und so insbesondere die Kerbfestigkeit der Verbindung erhöht werden.

Gemäß einer weiteren vorteilhaften Variante ist vorgesehen, dass das Fahrzeug-Dachteil außer der ersten oberen transparenten Kunststoffschicht noch eine zweite untere transparente Kunststoffschicht aufweist, an die sich nach unten eine nicht transparente Schicht aus einem Kunststoff eines Versteifungsprofils anschließt, die an ihrer Trennfläche mittels eines Laserstrahls eines oberhalb der ersten Kunststoffschicht) geführten Laserschweisskopfs zumindest punktuell miteinander verbunden werden. Auf diese Weise lassen sich auch separate Verstärkungsbauteile in einfacher Weise mit dem Dachteil verbinden. Auch Metall-Kunststoff-Hybridbauteile können mit nach oben überstehenden nicht transparenten Kunststoffflächen durch das Laser-Durchstrahlschweiss-Verfahren mit dem Kunststoff-Dachteil verbunden werden.

Nachfolgend werden erfindungsgemäße Verwendungen zur Herstellung eines Fahrzeug-Dachteils unter Bezugnahme auf die Zeichnung näher erläutert. Es zeigt:
- Fig. 1: eine schematische perspektivische Ansicht auf ein Fahrzeugdach in geschlossenem Zustand;
- Fig. 2: einen schematischen Teilquerschnitt durch den Randbereich des vorderen Dachteils gemäß der Schnittlinie II-II;
- Fig. 3: eine vergrößerte Detailansicht eines Ausschnitts der Fig. 2;
- Fig. 4: einen schematischen Teilquerschnitt durch den Randbereich des vorderen Dachteils mit einem im Randbereich angeordneten Hybrid-Verstärkungsbauteil, und
- Fig. 5: eine perspektivische Teilansicht des Hybrid-Verstärkungsbauteils gemäß Fig. 4.

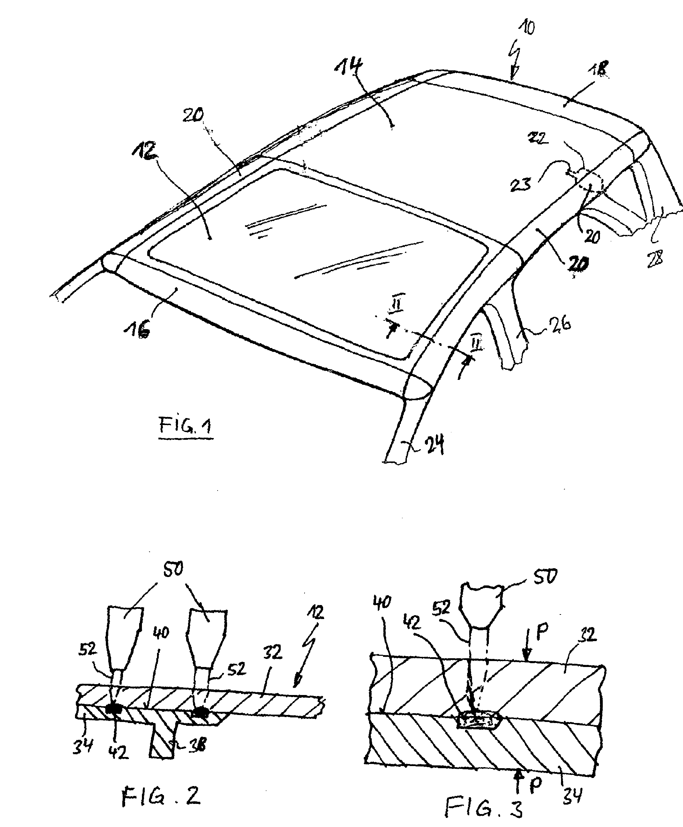

Das in Fig. 1 gezeigte Fahrzeugdach 10 setzt sich zusammen aus einem bewegbaren vorderen Dachteil 12, einem festen hinteren Dachteil 14, einem vorderen Querholm 16, einem hinteren Querholm 18 und zu beiden Seiten angeordneten Seitenholmen 20. Die Seitenholme 20 mit den Flanschen 23 können als separate Bauteile mit der A-Säule 24, der B-Säule 26 und der C-beziehungsweise D-Säule 28 verbunden sein, an denen die Dachteile 12 bzw. 14 fest oder bewegbar gelagert sind. Es ist jedoch ebenso möglich, tragende Holmstrukturen 22 mit Flanschen 23 unmittelbar an den seitlichen Bereichen der Dachteile 12 bzw. 14 mit anzuformen.

Die Dachteile 12 bzw. 14 sind bevorzugt Bestandteile eines RHT (Retractable Hardtop), also eines Festelement-Cabriolets, bei dem die in sich steifen Dachteile 12 bzw. 14 zur Freigabe einer Cabrio-artigen Dachöffnung mittels einer Mechanik in einen Stauraum im hinteren Bereich des Fahrzeugs bewegt werden können.

Die Dachteile 12 bzw. 14 bestehen zumindest in Teilbereichen aus wenigstens zwei Kunststoffschichten 32 bzw. 34 bevorzugt aus einem Polycarbonat (PC). Alternativ kann wenigstens eine der Kunststoffschichten 32, 34 auch aus einem Polycarbonat-Blend, wie Acrylnitril-Butadien-Styrol-Polycarbonat-Blend (ABS-PC), einem PC-Copolymer oder einem anderen PC-kompatiblen Material, wie Polyethylenterephthalat (PET) oder Polymethylmethacrylat (PMMA) bestehen.

Die Kunststoffschicht 32 ist aus einem transparenten Kunststoff hergestellt, während die darunter angeordnete, der Versteifung dienende zweite Kunststoffschicht 34 aus einem nicht transparenten Kunststoffmaterial besteht. Mittels eines Laserschweißkopfs 50 beziehungsweise mehrerer oberhalb der transparenten Kunststoffschicht 32 geführter Laserschweißköpfe 50 werden die beiden Kunststoffschichten 32 und 34 in Verbindungsbereichen 42 an der Trennflächen 40 miteinander verschweißt. Dabei durchdringen die von den Laserschweißköpfen 50 ausgesendeten Laserstrahlen 52 die transparente Kunststoffschicht 32, während sie von der Oberfläche der nicht transparenten Kunststoffschicht 34 absorbiert werden und dort eine starke Erwärmung im Bereich der Trennfläche 40 verursachen. Durch die Erwärmung wird der obere Teil der unteren Kunststoffschicht 34 ebenso aufgeschmolzen, wie der untere Teil der oberen Kunststoffschicht 32. In den Verbindungsbereichen 42 stellt sich dabei bei entsprechendem Anpressdruck P (siehe Figur 3) eine innige Verbindung zwischen den Kunststoffschichten 32 und 34 ein. Eine an der unteren Kunststoffschicht 34 ausgebildete vertikale Rippe 38 dient zur Anbindung einer nicht dargestellten, jedoch dem Fachmann bekannten Mechanik zur Bewegung des vorderen Dachteils 12.

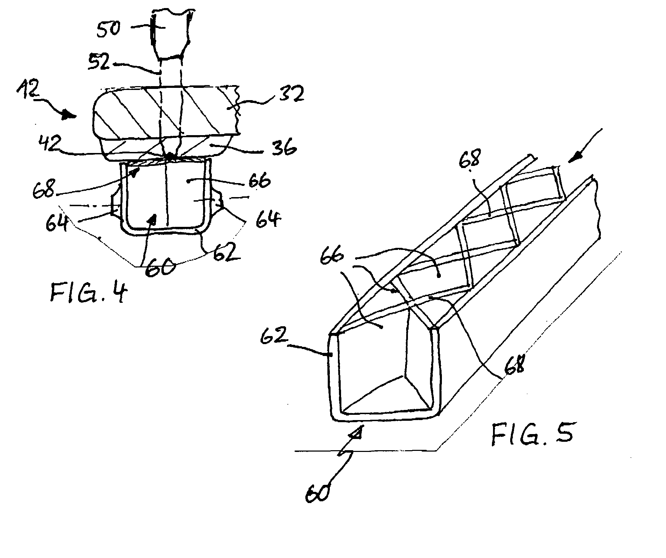

In den Fign. 4 und 5 ist eine weitere vorteilhafte Verwendung des Laser-Durchstrahlschweiss-Verfahrens zur Befestigung eines Hybrid-Verstärkungsprofils 60 an der Unterseite eines Dachteils 12 dargestellt. Das Hybrid-Verstärkungsprofil 60 setzt sich aus einem längsverlaufenden U-Profil 62 aus Metall, bevorzugt Leichtmetall, wie Aluminium, und einer in dessen inneren Hohlraum verlaufenden Versteifungsstruktur aus sich einander kreuzenden Versteifungsrippen 66 aus Kunststoff zusammen. Die oberen Enden 68 der Versteifungsrippen 66 stehen nach oben über das metallene U-Profil 62 über. Das Dachteil 12 weist in Figur 4 eine erste obere transparente Kunststoffschicht 32 und - abweichend von den Fign. 2 und 3 - eine zweite untere transparente Kunststoffschicht 36 auf. Der Kunststoff an den oberen Enden 68 der Versteifungsrippen 66 ist nicht transparent. Mittels eines oberhalb der ersten Kunststoffschicht 32 geführten Laserschweißkopfs 50 wird ein Laserstrahl 52 erzeugt, der die transparenten Kunststoffschichten 32 und 36 durchdringt und von den oberen Enden 68 absorbiert wird. Durch die Erhitzung werden die oberen Enden 68 und die gegenüberliegenden Flächen an der Unterseite der zweiten Kunststoffschicht 36 angeschmolzen und durch einen entsprechenden Anpressdruck innig miteinander verbunden. Dies Verfahren funktioniert auch wenn keine zweite transparente Kunststoffschicht 36 vorhanden ist zur Verbindung einer einzigen transparenten Kunststoffschicht 32 mit dem Hybrid-Verstärkungsprofil 60.

Die in Figur 4 angedeuteten, in das Hybrid-Verstärkungsbauteil 60 integrierten Lageraugen 64 dienen ebenfalls zur Anbindung einer Betätigungsmechanik für das Dachteil 12.

### Bezugszeichenliste

- 10: Fahrzeugdach
- 12: Dachteil
- 14: Dachteil
- 16: (vorderer) Querholm
- 18: (hinterer) Querholm
- 20: Seitenholm
- 22: Holmstruktur
- 23: Flansch (an 20)
- 24: A-Säule
- 26: B-Säule
- 28: C-Säule
- 32: (äußere) Kunststoffschicht
- 34: (innere) Kunststoffschicht
- 36: (innere) Kunststoffschicht

- 38: Rippe (an 34)
- 40: Trennfläche (zwischen 32, 34)
- 42: Verbindungsbereich
- 50: Laserschweisskopf
- 52: Laserstrahl
- 60: Hybrid-Verstärkungsprofil
- 62: U-Profil (Metall)
- 64: Lagerauge
- 66: Versteifungsrippen (Kunststoff)
- 68: obere Enden (von 66)
- P: Anpressdruck

## Patentansprüche

1. Verwendung eines Laser-Durchstrahlschweiss-Verfahrens zum Herstellen eines Fahrzeug-Dachteils (12, 14) mit wenigstens zwei miteinander verbundenen Kunststoffschichten (32, 34), **dadurch gekennzeichnet, dass** das Fahrzeug-Dachteil (12, 14) wenigstens eine erste obere transparente Kunststoffschicht (32, 36) und eine zweite untere nicht transparente Kunststoffschicht (34) aufweist, die an ihrer Trennfläche (40) mittels eines Laserstrahls (52) eines oberhalb der ersten Kunststoffschicht (32) geführten Laserschweisskopfs (50) zumindest punktuell miteinander verbunden werden.

2. Verwendung eines Laser-Durchstrahlschweiss-Verfahrens nach Anspruch 1, **dadurch gekennzeichnet, dass** die erste obere transparente Kunststoffschicht (32) aus Polycarbonat besteht.

3. Verwendung eines Laser-Durchstrahlschweiss-Verfahrens nach Anspruch 1 oder 2, **dadurch gekennzeichnet, dass** zweite untere nicht transparente Kunststoffschicht (34) aus Polycarbonat besteht.

4. Verwendung eines Laser-Durchstrahlschweiss-Verfahrens nach einem der vorhergehenden Ansprüche, **dadurch gekennzeichnet, dass** der Laserstrahl zum nachträglichen Aufschmelzen von problematischen Kontaktbereichen der ersten Kunststoffschicht (32) mit der zweiten Kunststoffschicht (34) verwendet wird, wobei die zweite Kunststoffschicht (34) zuvor durch ein Kunststoffspritzverfahren mit der ersten Kunststoffschicht (32) flächig verbunden wurde.

5. Verwendung eines Laser-Durchstrahlschweiss-Verfahrens nach einem der vorhergehenden Ansprüche, **dadurch gekennzeichnet, dass** das Fahrzeug-Dachteil (12, 14) eine erste obere transparente Kunststoffschicht (32) und eine zweite untere transparente Kunststoffschicht (36) aufweist, an die sich nach unten eine nicht transparente Schicht aus einem Kunststoff eines Verstärkungsprofils (60) anschließt, die an ihrer Trennfläche (40) mittels eines Laserstrahls (52) eines oberhalb der ersten Kunststoffschicht (32) geführten Laserschweisskopfs (50) zumindest punktuell miteinander verbunden werden.
